# FASCICULE DE BREVET EUROPEEN

(11) **EP 1 250 253 B1**
(45) Date de publication et mention de la délivrance du brevet: **07.04.2004**
(21) Numéro de dépôt: 01903957.7
(22) Date de dépôt: 16.01.2001
(51) Int. Cl.: B62D 5/06

(54) **FLEXIBLE DE TRANSFERT DE FLUIDE A ATTENUATION DE BRUIT, EN PARTICULIER POUR UN SYSTEME PILOTE DE DIRECTION ASSISTEE DE VEHICULE AUTOMOBILE**
SCHALLGEDÄMPFTER FLUIDSCHLAUCH, INSBESONDERE FÜR EIN FREMDGEFÜHRTES LENKHILFSSYSTEM EINES KRAFTFAHRZEUGS
NOISE REDUCING FLUID TRANSFER HOSE, IN PARTICULAR FOR A MOTOR VEHICLE POWER STEERING CONTROLLED SYSTEM

(30) Priorité: 28.01.2000 FR 0001112
(43) Date de publication de la demande: 23.10.2002
(73) Titulaire: HUTCHINSON, 75008 Paris (FR)
(72) Inventeur: DROUET, Philippe, F-45200 Amilly (FR)
(74) Mandataire: Doireau, Marc
(86) Numéro de dépôt international: PCT/FR2001/000126
(87) Numéro de publication internationale: WO 2001/054959

(56) Documents cités:
- US-A- 5 495 711
- US-A- 5 539 164
- "A PRESSURE HOSE INCORPORATING TWO TYPES OF HOSE MATERIAL TO REDUCE PRESSURE RIPPLE AT BOTH ENDS OF THE HOSE" RESEARCH DISCLOSURE,GB,INDUSTRIAL OPPORTUNITIES LTD. HAVANT, no. 399, 1 juillet 1997 (1997-07-01), page 469 XP000726591 ISSN: 0374-4353

## Description

L'invention concerne un flexible de transfert de fluide à atténuation de bruit, en particulier pour un système piloté de direction assistée de véhicule automobile et selon le préambule de la revendication 1.

On sait que certains flexibles hydrauliques utilisés dans l'industrie automobile, en particulier ceux qui équipent les systèmes de direction assistée, sont munis d'un atténuateur de bruit, souvent désigné dans la technique sous le nom de "tuner". US 5 539 164 décrit un flexible selon le préambule de la revendication 1.

D'une manière générale, un système de direction assistée comprend notamment un circuit haute pression avec une pompe hydraulique qui alimente en fluide sous pression une servo-valve qui est reliée au dispositif à crémaillère du système de direction des roues directrices du véhicule. Le flexible hydraulique qui relie la pompe à la servo-valve est constitué de tronçons souples formés de tuyaux et de tronçons rigides formés de tubes, et souvent d'au moins un atténuateur de bruit, sous la forme d'une gaine souple métallique ou en matière plastique, qui est monté à l'intérieur d'un tronçon souple du flexible pour atténuer notamment le bruit de fonctionnement de la pompe qui tend à remonter par la colonne de direction jusqu'à l'habitacle du véhicule.

A une première génération de directions assistées où la pompe hydraulique était actionnée par l'arbre du moteur du véhicule automobile, est venue se substituer une deuxième génération où la pompe hydraulique est mise en route par un moteur électrique, cette direction assistée étant souvent dénommée dans la technique comme étant du type GEP (Groupe Electro-Pompe).

Avec cette deuxième génération de directions assistées où la pompe hydraulique est dissociée de l'arbre moteur du véhicule, il est possible de la loger à un emplacement quelconque, mais l'emplacement disponible se trouve le plus souvent rapproché de l'habitacle du véhicule compte tenu du peu de place restant sous le capot moteur qui est déjà fort encombré.

A l'heure actuelle, on connaît une troisième génération de directions assistées du type GEP précité mais qui sont pilotées, c'est-à-dire que le moteur électrique de la pompe hydraulique n'est mis en fonctionnement que lorsque le volant est actionné par le conducteur.

Avec cette troisième génération de directions assistées du type GEP piloté, les atténuateurs de bruit doivent être opérationnels dans une plage de fréquence élargie de l'ordre de 150 Hz à 800 Hz.

Un but de l'invention est de concevoir un flexible hydraulique à atténuation de bruit qui est particulièrement bien adapté pour un système piloté de direction assistée du type précité mais sans pour autant constituer une limitation de l'invention.

A cet effet, l'invention propose un flexible de transfert de fluide à atténuation de bruit selon la revendication 1.

D'une manière générale, le temps de réponse peut être de l'ordre de 40 à 60ms, en particulier de l'ordre de 50ms.

En effet, dans le cas d'une direction assistée pilotée selon la troisième génération précitée, le temps de réponse de la direction assistée fait notamment intervenir le temps de réaction lié à la rotation du volant et qui peut varier d'un constructeur à l'autre, et le temps de réaction lié à l'expansion volumétrique des tronçons de tuyau du flexible haute pression qui relie la pompe à la servo-valve.

A titre d'exemple, sur la base d'un temps de réponse maximum de l'ordre de 120ms et avec un temps de réaction lié à la rotation du volant de l'ordre de 70ms, il ne reste plus qu'un temps de réaction de l'ordre de 50ms pour l'expansion volumétrique des tronçons de tuyau du flexible.

Il en résulte que le temps de réaction alloué à l'expansion volumétrique des tronçons de tuyau du flexible est relativement réduite, ce qui entraîne une limitation de la longueur de ces tronçons.

D'autres caractéristiques avantageuses sont décrites dans les revendications dépendantes 2-9.

D'une manière générale, les atténuateurs de bruit peuvent être constitués par une gaine métallique ou en matière plastique.

Ainsi, un flexible selon l'invention permet d'arriver à un compromis permettant de satisfaire aux conditions imposées par les constructeurs automobiles tant sur le temps de réponse de la direction assistée que sur l'atténuation des bruits résultant notamment du fonctionnement intermittent de la pompe.

L'invention a également pour objet un système piloté de direction assistée pour véhicule automobile, qui est caractérisé en ce qu'il comprend un circuit haute pression équipé d'un flexible tel que défini précédemment, ledit flexible étant monté entre une électro-pompe et une servo-valve qui est reliée au dispositif à crémaillère du système de direction du véhicule automobile, et en ce que ledit système est commandé à partir de la rotation du volant.

D'autres avantages, caractéristiques et détails de l'invention ressortiront du complément de description qui va suivre, en référence à des dessins annexés, donnés uniquement à titre d'exemple et dans lesquels :
- la figure 1 est une vue schématique illustrant les différents tronçons d'un flexible hydraulique selon l'invention pour un système piloté de direction assistée,
- la figure 2 représente un premier atténuateur de bruit qui est logé dans le flexible illustré sur la figure 1, et
- la figure 3 représente un second atténuateur de bruit qui est également logé dans le flexible illustré sur la figure 1.

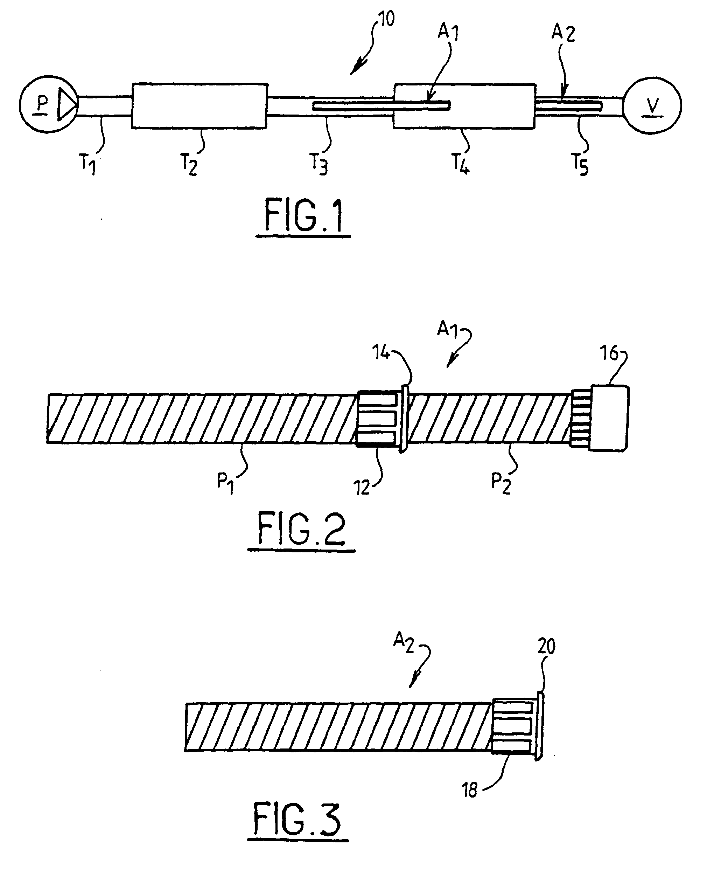

On se réfère à la figure 1 qui représente un exemple de flexible hydraulique 10 pour un système pilotée de direction assistée pour véhicule automobile.

La représentation du système a été volontairement limitée au circuit haute pression entre une électro-pompe qui est reliée à un réservoir de fluide et mise en route à partir d'un moteur électrique, et une servo-valve V qui est alimentée en fluide sous pression par la pompe P et reliée au dispositif à crémaillère du système de direction des roues directrices du véhicule automobile.

Le flexible hydraulique 10 est monté entre la sortie de la pompe P et une entrée de la servo-valve V, et est constitué d'une alternance de tronçons rigides formés par des tubes et de tronçons souples formés par des tuyaux.

Selon le mode de réalisation illustré sur la figure 1, le flexible hydraulique 10 est constitué à partir de la pompe P :
- d'un premier tronçon d'extrémité de tube T1 qui est raccordé à la sortie de la pompe P et qui s'étend sur une longueur de l'ordre de 200mm,
- d'un premier tronçon intermédiaire de tuyau T2 qui s'étend sur une longueur de l'ordre de 175mm,
- d'un tronçon central de tube T3 qui s'étend sur une longueur de l'ordre de 300mm,
- d'un second tronçon intermédiaire de tuyau T4 qui s'étend sur une longueur de l'ordre de 235mm, et
- d'un second tronçon d'extrémité de tube T5 qui est raccordé à une entrée de la servo-valve V et qui s'étend sur une longueur de l'ordre de 430mm pour une conduite à droite ou de l'ordre de 533mm pour une conduite à gauche.

Les tronçons de tube T1, T3 et T5 sont métalliques avec un diamètre intérieur de l'ordre de 8mm, alors que les tronçons de tuyau T2 et T4 ont un diamètre intérieur de l'ordre de 10mm, par exemple, et comprennent au moins une couche en un matériau compatible avec le fluide transporté et un revêtement extérieur de protection contre l'agressivité de l'environnement extérieur.

Le flexible 10 est équipé d'atténuateurs de bruit qui, dans ce mode de réalisation, sont au nombre de deux, à savoir :
- un premier atténuateur de bruit A1 qui vient se monter en partie dans le tronçon central de tube T3 et en partie dans le second tronçon intermédiaire de tuyau T4, ce premier atténuateur ayant un diamètre extérieur de l'ordre de 6mm et s'étendant sur une longueur de l'ordre de 514mm, dont environ 368mm à l'intérieur du tube T3 et 146mm à l'intérieur du tuyau T4,
- un second atténuateur de bruit A2 qui vient se monter dans le second tronçon d'extrémité du tube T5, à partir du second tronçon intermédiaire de tuyau T4, d'un diamètre extérieur de l'ordre de 6mm et d'une longueur de l'ordre de 200mm.

D'une manière générale, chaque atténuateur de bruit A1 et A2 est constitué par une gaine souple qui peut être soit métallique et spiralée hélicoïdalement, à simple agrafage en L ou double agrafage en U par exemple, soit en matière plastique et percée en des emplacements prédéterminés de trous de passage du liquide circulant dans le flexible 10.

Dans l'exemple de réalisation illustré sur les figures 2 et 3, les atténuateurs bruit A1 et A2 sont chacun constitués par une gaine métallique souple à double agrafage, par exemple.

Le premier atténuateur de bruit A1, tel qu'illustré sur la figure 2, est scindé en deux parties P1 et P2 qui s'étendent respectivement dans le tronçon central de tube T3 et dans le second tronçon intermédiaire de tuyau T4, ces deux parties étant reliées l'une à l'autre au moyen d'une bague métallique 12 fixée par sertissage. Cette bague 12 comprend également une collerette 14 qui sert de butée pour positionner l'atténuateur de bruit A1 dans le tube central T3 avant de raccorder l'un à l'autre ce tronçon de tube T3 avec le tronçon de tuyau T4.

Avantageusement, l'extrémité libre de la partie P2 de l'atténuateur de bruit A1, qui est logée dans le tuyau T4 reçoit une bague 16 en élastomère par exemple pour éviter une usure du tuyau T4 par suite des vibrations dues à l'écoulement de type pulsatoire du fluide sous pression et qui entraînent des chocs répétés de l'atténuateur sur la paroi interne du tuyau T4.

Le second atténuateur de bruit A2, tel qu'illustré sur la figure 3, reçoit à une extrémité une bague métallique 18 fixée par sertissage et comprend également une collerette de positionnement 20 dans le tronçon de tube T5 avant de raccorder ce tronçon de tube T5 au tronçon de tuyau T4.

Les dispositifs de raccordement entre un tronçon de tube et un tronçon de tuyau n'ont pas été représentés. A titre d'exemple, l'extrémité du tronçon de tube forme un embout sur lequel on vient emmancher à force une extrémité du tronçon de tuyau, puis rapporter une bague métallique qui est sertie pour assurer le raccordement.

Le mode de réalisation de l'invention tel que décrit précédemment satisfait notamment à un temps de réponse maximum de la direction assistée de l'ordre de 120ms dont environ 50ms correspondant à l'expansion volumétrique des tronçons de tuyau souples du flexible.

D'une manière générale, l'invention n'est pas limitée au mode de réalisation décrit précédemment et appliqué à un système piloté de direction assistée pour véhicule automobile. En particulier, le flexible selon l'invention peut trouver application dans tout conduit de transfert de fluide en régime pulsatoire qui inclut des tronçons de tuyau souples.

## Revendications

1. Flexible de transfert de fluide à atténuation de bruit, en particulier pour un système piloté de direction assistée de véhicule automobile, ce flexible pouvant être monté dans un circuit haute pression pour relier une électro-pompe (P) et un organe commandé (V) qui est alimenté en fluide sous pression à partir de ladite pompe, ledit flexible (10) comprenant cinq tronçons, à savoir, en partant de la pompe :
- un premier tronçon rigide d'extrémité de tube (T1) qui est raccordé à la pompe,
- un premier tronçon souple intermédiaire de tuyau (T2),
- un tronçon central rigide de tube (T3),
- un second tronçon intermédiaire souple de tuyau (T4), et
- un second tronçon rigide d'extrémité de tube (T5) qui est raccordé à l'organe commandé,
les tronçons (T2, T4) de tuyau du flexible ayant une longueur qui est déterminée en fonction du temps de réponse, le plus faible possible, lié à leur expansion volumétrique lors de l'actionnement de l'électro-pompe (P), au moins deux atténuateurs de bruit (A1, A2) logés dans le flexible (10), **caractérisé en ce que** le premier atténuateur de bruit (A1 ) est logé en partie dans le tronçon central de tube rigide (T3) et en partie dans le second tronçon de tube souple (T4), et **en ce que** le second atténuateur de bruit (A2) est logé dans le second tronçon d'extrémité de tube rigide (T5).

2. Flexible selon la revendication 1, **caractérisé en ce que** le temps de réponse est de l'ordre de 40 à 60ms, en particulier de l'ordre de 50ms.

3. Flexible selon l'une quelconque des revendications 1 à 2, **caractérisé en ce que** :
- les premier et second tronçons d'extrémité de tube (T1,T5) s'étendent respectivement sur des longueurs de l'ordre de 200mm, et de l'ordre de 430mm pour une conduite à droite ou de l'ordre de 533mm pour une conduite à gauche,
- le tronçon central de tube (T3) s'étend sur une longueur de l'ordre de 300mm, et
- les premier et second tronçons intermédiaires de tuyau (T2,T4) s'étendent respectivement sur des longueurs de l'ordre de 175mm et 235mm.

4. Flexible selon la revendication 3, **caractérisé en ce que** le premier atténuateur de bruit (A1) s'étend sur une longueur de l'ordre de 514mm.

5. Flexible selon la revendication 4, **caractérisé en ce que** le premier atténuateur de bruit (A1) s'étend sur une longueur de l'ordre de 368mm dans le tronçon central de tube (T3) du flexible.

6. Flexible selon la revendication 4 ou 5, **caractérisé en ce que** le second atténuateur de bruit (A2) s'étend sur une longueur de l'ordre de 200mm.

7. Flexible selon l'une quelconque des revendications précédentes, **caractérisé en ce que** les tronçons de tube (T1,T3,T5) ont un diamètre intérieur de l'ordre de 8mm, **en ce que** les tronçons de tuyau (T2,T4) ont un diamètre intérieur de l'ordre de 10mm, et **en ce que** les atténuateurs de bruit (A1 ,A2) ont un diamètre extérieur de l'ordre de 6mm.

8. Flexible selon l'une quelconque des revendications précédentes, **caractérisé en ce que** les atténuateurs de bruit (A1,A2) sont constitués par une gaine métallique ou en matière plastique.

9. Système piloté de direction assistée pour véhicule automobile, **caractérisé en ce qu'**il comprend un circuit haute pression équipé d'un flexible (10) tel que défini par l'une quelconque des revendications précédentes, ledit flexible (10) étant monté entre une électro-pompe (P)et une servo-valve (V) qui est reliée au dispositif à crémaillère du système de direction du véhicule automobile, et **en ce que** ledit système est commandé à partir de la rotation du volant.

## Patentansprüche

1. Schallgedämpfter Fluidtransfer-Schlauch, insbesondere für ein vorgesteuertes Servo-Lenksystem von Kraftfahrzeugen, wobei der Schlauch in einem Hochdruckkreislauf zum Verbinden einer elektrischen Pumpe (P) und eines Steuerorgans (V), welches von der Pumpe aus mit unter Druck stehendem Fluid versorgt wird, angebracht sein kann, wobei der Schlauch (10) fünf Teilstücke, nämlich von der Pumpe ausgehend:
- ein erstes festes Rohrendstück (T1), welches an die Pumpe angeschlossen ist,
- ein erstes zwischenliegendes weiches Schlauchteilstück (T2),
- ein mittleres festes Rohrteilstück (T3),
- ein zweites zwischen liegendes weiches Schlauchteilstück (T4) und
- ein zweites festes Rohrendstück (T5), welches an das Steuerorgan (V) angeschlossen ist,
wobei die flexiblen Schlauchteilstücke (T2, T4) eine Länge aufweisen, welche als Funktion einer so kurz wie möglichen mit ihrer Volumenausdehnung bei Betätigung der elektrischen Pumpe (P) verbundenen Antwortzeit bestimmt ist, und zumindest zwei Schalldämpfer (A1, A2), welche in dem Schlauch (10) untergebracht sind, umfasst, **dadurch gekennzeichnet, dass** der erste Schalldämpfer (A1) zum Teil in dem mittleren festen Rohrteilstück (T3) und zum Teil in dem zweiten weichen Schlauchteilstück (T4) untergebracht ist, und dass der zweite Schalldämpfer (A2) in dem zweiten festen Rohrendstück (T5) untergebracht ist.

2. Schlauch gemäß Anspruch 1, **dadurch gekennzeichnet, dass** die Antwortzeit in dem Bereich von 40 bis 60 ms, insbesondere im Bereich von 50 ms, liegt.

3. Schlauch gemäß einem beliebigen der Ansprüche 1 bis 2, **dadurch gekennzeichnet, dass**:
- die ersten und zweiten Rohrendstücke (T1, T5) sich über Längen im Bereich von 200 mm beziehungsweise im Bereich von 430 mm für eine rechte Leitung oder im Bereich von 533 mm für eine linke Leitung erstrecken,
- das mittlere feste Rohrteilstück (T3) sich über eine Länge im Bereich von 300 mm erstreckt, und
- die ersten und zweiten zwischenliegenden Schlauchteilstücke (T2, T4) sich über Längen im Bereich von 175 mm beziehungsweise 235 mm erstrecken.

4. Schlauch gemäß Anspruch 3, **dadurch gekennzeichnet, dass** der erste Schalldämpfer (A1) sich über eine Länge im Bereich von 514 mm erstreckt.

5. Schlauch gemäß Anspruch 4, **dadurch gekennzeichnet, dass** der erste Schalldämpfer (A1) sich in dem mittleren Rohrteilstück (T3) des Schlauches über eine Länge im Bereich von 368 mm erstreckt.

6. Schlauch gemäß Anspruch 4 oder 5, **dadurch gekennzeichnet, dass** der zweite Schalldämpfer (A2) sich über eine Länge im Bereich von 200 mm erstreckt.

7. Schlauch gemäß einem der vorhergehenden Ansprüche, **dadurch gekennzeichnet, dass** die Rohrteilstücke (T1, T3, T5) einen inneren Durchmesser im Bereich von 8 mm aufweisen, dass die Schlauchteilstücke (T2, T4) einen inneren Durchmesser im Bereich von 10 mm aufweisen, und dass die Schalldämpfer (A1, A2) einen äußeren Durchmesser im Bereich von 6 mm aufweisen.

8. Schlauch gemäß einem der vorhergehenden Ansprüche, **dadurch gekennzeichnet, dass** die Schalldämpfer (A1, A2) aus einer metallischen Hülse oder aus Kunststoffmaterial gebildet sind.

9. Vorgesteuertes Servo-Lenksystem für Kraftfahrzeuge, **dadurch gekennzeichnet, dass** es einen Hochdruckkreislauf umfasst, welcher mit einem wie in einem beliebigen der vorhergehenden Ansprüche definierten Schlauch (10) versehen ist, wobei der Schlauch (10) zwischen einer elektrischen Pumpe (P) und einem ServoVentil (V), welches mit einem Zahngestänge des Servo-Lenksystems des Kraftfahrzeugs verbunden ist, angebracht ist, und dass das System mittels der Drehung eines Lenkrads gesteuert ist.

## Claims

1. A noise-attenuating fluid transfer conduit, in particular for a pilot-controlled power steering system of a motor vehicle, the conduit being mountable in a high pressure circuit for connecting an electrically-driven pump (P) to a controlled member (V) which is fed with pressurized fluid from said pump, said conduit (10) comprising five segments, namely, going from the pump:
- a first rigid end segment of tube (T1) connected to the pump;
- a first flexible intermediate segment of hose (T2);
- a central rigid segment of tube (T3);
- a second flexible intermediate segment of hose (T4); and
- a second rigid end segment of tube (T5) connected to the controlled member,
the flexible hose segments (T2, T4) of the conduit being of a length which is determined as a function of as short as possible a response time associated with their volume expanding when the electrically-driven pump (P) is set into operation, and at least two noise attenuators (A1, A2) being housed inside the conduit (10), the conduit being **characterized in that** the first noise attenuator (A1) is housed in part in the central rigid segment of tube (T3) and in part in the second flexible segment of tube (T4), and **in that** the second noise attenuator (A2) is housed in the second rigid end segment of tube (T5).

2. A conduit according to claim 1, **characterized in that** the response time is about 40 ms to 60 ms, and in particular is about 50 ms.

3. A conduit according to claim 1 or claim 2, **characterized in that**:
- the first and second end segments of tube (T1, T5) extend respectively over lengths of about 200 mm, of about 430 mm for a right-hand pipe, and about 533 mm for a left-hand pipe;
- the central segment of tube (T3) extends over a length of about 300 mm; and
- the first and second intermediate segments of hose (T2, T4) extend respectively over lengths of about 175 mm and about 235 mm.

4. A conduit according to claim 3, **characterized in that** the first noise attenuator (A1) extends over a length of about 514 mm.

5. A conduit according to claim 4, **characterized in that** the first noise attenuator (A1) extends over a length of about 368 mm in the central segment of tube (T3) of the conduit.

6. A conduit according to claim 4 or claim 5, **characterized in that** the second noise attenuator (A2) extends over a length of about 200 mm.

7. A conduit according to any preceding claim, **characterized in that** the segments of tube (T1, T3, T5) have an inside diameter of about 8 mm, **in that** the segments of hose (T2, T4) have an inside diameter of about 10 mm, and **in that** the noise attenuators (A1, A2) have an outside diameter of about 6 mm.

8. A conduit according to any preceding claim, **characterized in that** the noise attenuators (A1, A2) are constituted by a sheath made of metal or of plastics material.

9. A pilot-controlled power steering system for a motor vehicle, **characterized in that** it comprises a high pressure circuit fitted with a conduit (10) as defined in any preceding claim, said conduit (10) being mounted between an electrically-driven pump (P) and a servo-valve (V) which is connected to the rack device of the steering system of the motor vehicle, and **in that** said system is controlled by tuming the steering wheel.
